# DEMANDE DE BREVET EUROPEEN

(11) **EP 2 754 573 A1**
(43) Date de publication de la demande: **16.07.2014**
(21) Numéro de dépôt: 13198168.0
(22) Date de dépôt: 18.12.2013
(51) Int. Cl.: B60G 7/04, F16F 1/44

(54) **Butée d'attaque pour la suspension d'un véhicule automobile, comprenant un capteur de pression**

(30) Priorité: 10.01.2013 FR 1350206
(71) Demandeur: PEUGEOT CITROËN AUTOMOBILES SA, 78140 Velizy-Villacoublay (FR)
(72) Inventeur: Monteil, Christophe, 60530 Le Mesnil en Thelle (FR)

(57) **Abrégé**

Butée d'attaque pour la suspension d'un véhicule automobile, comprenant un bloc en élastomère (16) comportant une raideur destinée à freiner la fin de course d'un élément de la suspension, caractérisée en ce que ce bloc en élastomère (16) comporte une cavité intérieure fermée (8), qui est reliée à un capteur de pression (12) donnant une mesure de la pression dans la cavité.

## Description

La présente invention concerne une butée d'attaque d'une suspension d'un véhicule automobile, comportant un capteur de pression, ainsi qu'un procédé d'évaluation de la charge d'un véhicule, et un véhicule automobile équipé de telles butées d'attaque.

Les véhicules automobiles comportent généralement pour chaque roue une suspension comprenant un ressort de suspension, un amortisseur qui freine les mouvements de la suspension, et une butée d'attaque sur laquelle vient appuyer un élément de la suspension quand il arrive en fin de course, afin de freiner sa fin de course pour l'arrêter.

Par ailleurs certains véhicules, en particulier les véhicules utilitaires, comportent un système d'estimation de la charge totale, permettant en particulier de vérifier si la charge ne dépasse pas la masse totale en charge autorisée, afin de respecter la réglementation et d'assurer la sécurité.

Un système de mesure de la charge connu, présenté notamment par le document JP-9236498, comporte un capteur de charge placé sur un appui d'un ressort hélicoïdal de suspension, qui permet de mesurer la charge réelle appliquée sur cette suspension. On peut ainsi évaluer la charge totale du véhicule. Toutefois, ce système nécessite une modification du moyen d'appui du ressort de suspension, ce qui peut être relativement complexe et onéreux. De plus, ce système ne s'applique pas à tous les types de suspension.

Un autre type de système connu utilisé pour évaluer la charge d'un véhicule, comporte un capteur de mesure du débattement de la suspension qui permet à partir d'une courbe contenue en mémoire de relation entre le débattement et l'effort, d'évaluer le niveau de cette charge.

Cependant ce principe d'évaluation est généralement peu précis à cause notamment du vieillissement des ressorts, qui peuvent fléchir ou fluer, des frottements des articulations de suspension qui ajoutent une hystérésis au mouvement, de l'état de fonctionnement des amortisseurs, et des dispersions de fabrication des différents composants qui peuvent être importantes. En particulier, les butées d'attaque en polyuréthane peuvent comporter un fluage de la matière quand elle est soumise à une charge pendant une certaine durée.

De plus, la courbe d'effort de la charge en fonction du déplacement sur une butée en élastomère, comporte une forme globalement exponentielle qui fait qu'au-dessus d'une certaine charge, l'incertitude sur cette mesure est forte pour un petit enfoncement de la suspension.

En pratique, ces systèmes d'évaluation de la charge ne permettent pas d'atteindre une précision sur la charge du véhicule inférieure à 50 kg.

La présente invention a notamment pour but d'éviter ces inconvénients de la technique antérieure, en proposant un moyen simple et efficace permettant d'estimer la charge d'un véhicule.

Elle propose à cet effet une butée d'attaque pour la suspension d'un véhicule automobile, comprenant un bloc en élastomère comportant une raideur destinée à freiner la fin de course d'un élément de la suspension, caractérisée en ce que ce bloc en élastomère comporte une cavité intérieure fermée, qui est reliée à un capteur de pression donnant une mesure de la pression dans la cavité.

Un avantage de la butée d'attaque selon l'invention est que grâce à la mesure de la pression dans la cavité, liée directement à la force s'appliquant sur cette butée et causant sa déformation, on peut obtenir un capteur simple et économique de la charge, qui nécessite des modifications mineures de butées d'attaque existantes, sans modifier le reste du véhicule.

La butée d'attaque selon l'invention peut de plus comporter une ou plusieurs des caractéristiques suivantes, qui peuvent être combinées entre elles.

Avantageusement, le bloc en élastomère est prévu pour recevoir la force d'un élément de suspension suivant une direction sensiblement axiale, la cavité se trouvant alignée suivant cet axe.

Selon un mode de réalisation, la cavité se prolonge dans le bloc en élastomère par un perçage, pour conduire la pression d'air au capteur.

En particulier, le bloc en élastomère peut être fixé par un téton ajusté dans un perçage d'un support.

Avantageusement, la cavité réalisée par moulage dans le bloc en élastomère, comporte une ouverture recevant un bouchon permettant le démoulage.

Selon un mode de réalisation, la butée d'attaque comporte un capteur de pression individuel.

Le capteur de pression peut être déporté, étant relié à la butée par une canalisation.

En particulier, le capteur de pression peut être un capteur commun pour plusieurs butées d'attaque.

L'invention a aussi pour objet un procédé d'évaluation de la charge d'un véhicule comportant des butées d'attaque des suspensions comprenant des cavités intérieures fermées qui sont reliées à des capteurs de pression donnant une mesure de pression dans ces cavités, ce procédé mesurant la pression lorsque le véhicule est à vide et lorsqu'il est en charge, puis calculant la différence entre ces deux pressions pour évaluer la charge du véhicule.

L'invention a aussi pour objet un véhicule automobile comprenant des butées d'attaque pour la suspension, comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue en coupe axiale d'une butée d'attaque selon invention, qui est au repos ;
- la figure 2 est une vue en coupe axiale de cette butée en charge ; et
- la figure 3 est un schéma d'un ensemble de butées pour un véhicule automobile, comportant un capteur de pression commun.

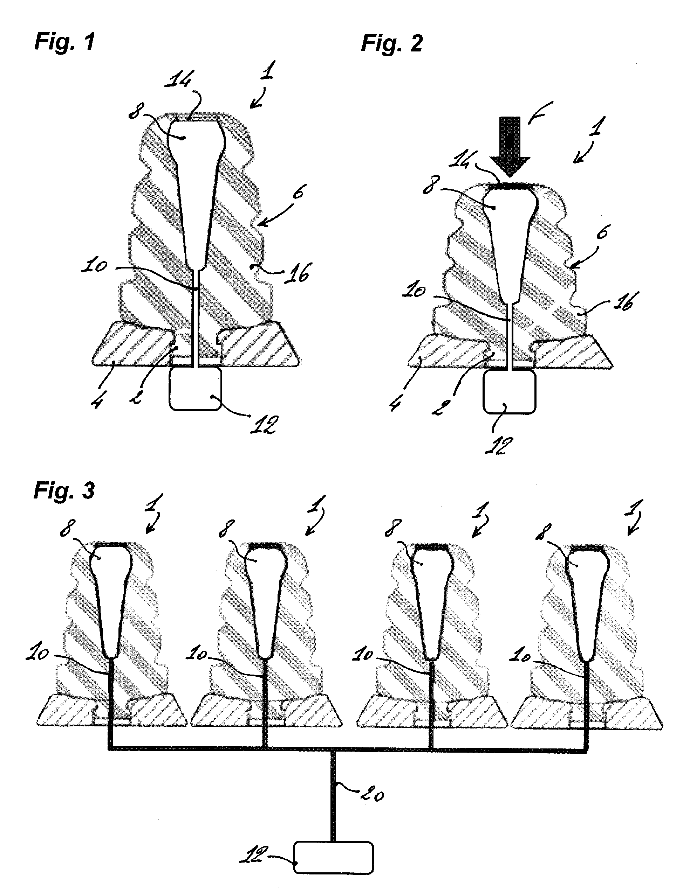

La figure 1 présente une butée d'attaque 1 comportant un bloc en élastomère 16, comme un polyuréthane ou un caoutchouc, comprenant une symétrie circulaire autour d'un axe disposé verticalement.

La face inférieure de la butée d'attaque 1 comporte un téton central 2 centré sur l'axe, tourné vers le bas, qui comprend sur son contour un bossage annulaire s'ajustant dans un perçage d'un support 4 pour le centrer et le maintenir.

Le support 4 est généralement fixé sous la caisse du véhicule, la face supérieure de la butée d'attaque 1 recevant suivant l'axe la pression d'un élément de la suspension d'une roue de ce véhicule, afin d'amortir la fin de course de cette suspension.

La butée d'attaque 1 comporte sur son pourtour une succession de creux annulaires 6 qui lui permettent de s'écraser verticalement avec une raideur comportant une certaine progressivité, afin de freiner et d'arrêter progressivement la course de l'élément de suspension.

Ce type de butée d'attaque 1 est largement répandu. Il est économique, peu encombrant, et comporte une bonne fiabilité.

La butée d'attaque 1 comporte de plus une cavité axiale allongée 8 réalisée dans le bloc en élastomère 16, qui part de la face supérieure de cette butée, et s'étend sur environ les deux tiers de sa hauteur. La cavité 8 comporte un diamètre plus important dans sa partie supérieure, et une forme verticale globalement conique qui se rétrécit vers le bas.

La cavité 8 se prolonge vers le bas par un perçage axial 10, qui traverse complètement la matière pour déboucher sous la face inférieure de la butée 1, au milieu du téton central 2.

La cavité 8 est formée directement lors du moulage de la matière élastomère à l'aide d'un noyau placé au centre du moule, qui est extrait après ce moulage par une ouverture supérieure. Le perçage axial 10 est aussi réalisé lors de ce moulage. Une rondelle 14 fixée ensuite en haut de la cavité axiale 8, forme un bouchon qui referme cette cavité après le moulage.

Un capteur de pression 12 fixé en dessous du support 4, est directement relié au perçage axial 10 afin de recevoir la pression d'air se trouvant dans la cavité axiale 8. Le capteur 12 est relié par des fils électriques au réseau de bord du véhicule, afin de transmettre une mesure de la pression dans la cavité 8 à un calculateur qui interprète cette mesure.

Au repos, la cavité 8 de la butée d'attaque 20 comporte une pression initiale, qui est fixé par construction.

Lors d'un fonctionnement de la butée d'attaque 1 présenté par la figure 2, cette butée est comprimée axialement par une force F, le volume fermé intérieur de la cavité 8 se réduit, ce qui entraîne une compression de l'air compris dedans. La loi de pression des gaz donne pour une température constante, une relation sensiblement proportionnelle entre les variations de volume et de pression.

La pression de l'air est transmise au capteur de pression 12, traduisant cette pression en un signal électrique envoyé au calculateur qui estime la force F s'appliquant sur cette butée, à partir de cartographies contenues en mémoire, en prenant en compte la différence entre la pression mesurée à ce moment et la pression initiale.

On peut en particulier en l'appliquant sur le train arrière d'un véhicule utilitaire, pour une charge suffisamment élevée permettant une compression de la butée d'attaque 1, évaluer cette charge qui s'applique généralement en majeure partie sur l'arrière du véhicule.

On peut aussi installer une butée d'attaque 1 indépendante sur chaque suspension du véhicule, pour en déduire la charge totale de ce véhicule.

On notera que par la mesure directe par le capteur de pression 12 ne comportant pas de mouvement, de la pression d'air dans la cavité 8 représentant assez fidèlement la compression de la matière élastomère, on peut obtenir une valeur de la force F précise comportant une faible hystérésis.

De plus la butée d'attaque 1 est très peu modifiée, elle peut s'implanter sur le véhicule avec peu de modifications, le capteur de pression additionnel 12 pouvant être compact. En particulier les caractéristiques dynamiques de la butée d'attaque 1 ne sont quasiment pas modifiées, son comportement restant similaire.

En variante, notamment pour des questions d'encombrement, d'accessibilité du capteur de pression 12, ou de passage du câblage électrique, ce capteur peut être éloigné de la butée d'attaque 1, en étant relié à cette butée par une canalisation.

On peut obtenir ainsi de manière simple et économique une estimation de la masse du véhicule sur le train roulant concerné, avec une précision constante dans le temps, qui est avantageusement délivrée à un moyen d'information du conducteur sur le niveau de cette charge, comme un affichage.

La figure 3 présente quatre butées d'attaque identiques 1 installées chacune sur la suspension d'une roue du véhicule, comportant leurs cavités 8 qui sont reliés ensemble par une canalisation 20 menant à un capteur de pression commun 12.

En utilisant ainsi un seul capteur de pression 12, nécessitant un unique câblage électrique, on peut obtenir avec une plus grande simplicité et un coût réduit, une seule mesure qui représente la somme des forces F s'appliquant sur toutes les butées 1. Cette mesure peut en particulier représenter la charge totale du véhicule.

En variante on pourrait relier ensemble les cavités 8 des deux butées d'attaque 1 d'un même essieu, afin d'obtenir par la mesure d'un capteur de pression commun 12, la charge s'appliquant sur cet essieu.

## Revendications

1. Butée d'attaque pour la suspension d'un véhicule automobile, comprenant un bloc en élastomère (16) comportant une raideur destinée à freiner la fin de course d'un élément de la suspension, **caractérisée en ce que** ce bloc en élastomère (16) comporte une cavité intérieure fermée (8), qui est reliée à un capteur de pression (12) donnant une mesure de la pression dans la cavité.

2. Butée d'attaque selon la revendication 1, **caractérisée en ce que** le bloc en élastomère (16) est prévu pour recevoir la force (F) d'un élément de suspension suivant une direction sensiblement axiale, la cavité (8) se trouvant alignée suivant cet axe.

3. Butée d'attaque selon la revendication 2, **caractérisée en ce que** la cavité (8) se prolonge dans le bloc en élastomère (16) par un perçage (10), pour conduire la pression d'air au capteur (12).

4. Butée d'attaque selon l'une quelconque des revendications précédentes, **caractérisée en ce que** le bloc en élastomère (16) est fixé par un téton (2) ajusté dans un perçage d'un support (4).

5. Butée d'attaque selon l'une quelconque des revendications précédentes, **caractérisée en ce que** la cavité (8) réalisée par moulage dans le bloc en élastomère (12), comporte une ouverture recevant un bouchon (14) permettant le démoulage.

6. Butée d'attaque selon l'une quelconque des revendications précédentes, **caractérisée en ce qu'**elle comporte un capteur de pression individuel (12).

7. Butée d'attaque selon l'une quelconque des revendications précédentes, **caractérisée en ce que** le capteur de pression (12) est déporté, étant relié à cette butée par une canalisation (20).

8. Butée d'attaque selon la revendication 7, **caractérisée en ce que** le capteur de pression (12) est un capteur commun pour plusieurs butées d'attaque (1).

9. Procédé d'évaluation de la charge d'un véhicule comportant des butées d'attaque de suspension (1) réalisées selon l'une quelconque des revendications précédentes, **caractérisé en ce qu'**il mesure la pression lorsque le véhicule est à vide et lorsqu'il est en charge, puis il calcule la différence entre ces deux pressions pour évaluer la charge du véhicule.

10. Véhicule automobile comprenant des butées d'attaque pour la suspension, **caractérisé en ce que** ces butées sont réalisées selon l'une quelconque des revendications 1 à 8.
